(19) Europäisches Patentamt
European Patent Office
Office européen des brevets

(11)  **EP 1 879 790 B1**

(12)  **EUROPÄISCHE PATENTSCHRIFT**

(45) Veröffentlichungstag und Bekanntmachung des Hinweises auf die Patenterteilung:
**18.03.2009   Patentblatt 2009/12**

(51) Int Cl.:
***B62M 23/02*** *(2006.01)*      ***B62M 7/12*** *(2006.01)*

(21) Anmeldenummer: 06721253.0

(22) Anmeldetag: **15.05.2006**

(86) Internationale Anmeldenummer:
**PCT/AT2006/000201**

(87) Internationale Veröffentlichungsnummer:
**WO 2006/119531 (16.11.2006 Gazette 2006/46)**

(54)  **FAHRZEUG**

VEHICLE

VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.05.2005   AT 8322005**
**16.08.2005   AT 13732005**

(43) Veröffentlichungstag der Anmeldung:
**23.01.2008   Patentblatt 2008/04**

(73) Patentinhaber: **Spinwood Trading & Consulting Ltd.**
**3723 Limassol (CY)**

(72) Erfinder: **GULAS, Stefan**
**14052 Berlin (DE)**

(74) Vertreter: **Babeluk, Michael**
**Patentanwalt**
**Mariahilfer Gürtel 39/17**
**1150 Wien (AT)**

(56) Entgegenhaltungen:
WO-A- 00/59773          DE-A1- 4 333 638
DE-A1- 19 732 430       FR-A- 2 824 043
US-A- 3 884 317

**EP 1 879 790 B1**

**Beschreibung**

Die Erfindung betrifft ein Fahrzeug, insbesondere Fahrrad gemäß dem Oberbegriff von Patentanspruch 1.

Es sind verschiedene Fahrzeuge bekannt, die einerseits mit Muskelkraft und andererseits mit einem Zusatzantrieb angetrieben werden können. Es handelt sich dabei zumeist um Elektrofahrräder, die eine Tretkurbel aufweisen, die über eine Antriebskette mit dem Hinterrad verbunden ist und zusätzlich mit einem Elektromotor ausgestattet sind, der alternativ oder zusätzlich zum Muskelantrieb eingesetzt werden kann. Nachteilig bei solchen Lösungen ist, dass bei gemischtem Betrieb die Fahrgeschwindigkeit nicht oder nur indirekt mit dem Antriebsmoment zusammenhängt, das an der Tretkurbel aufgebracht wird. Der Fahrer eines solchen Fahrrades muss daher sowohl den Elektromotor über einen Regler steuern, als auch eine entsprechende Anpassung der Tretleistung vornehmen, um die jeweils gewünschte Geschwindigkeit in Abhängigkeit von Steigungen, Gefällen und Windbedingungen herstellen zu können. Weiters ist aus der US 3,884,317 A ein Fahrrad bekannt geworden, das einen elektrischen Antrieb und eine Tretkurbel aufweist, die jedoch einen Generator antreibt und nicht mehr mit einem der Räder verbunden ist. Zusätzlich dazu kann Strom aus einer Batterie in das System eingespeist werden, so dass der elektrische Antriebsmotor teilweise mit dem Strom versorgt wird, den der Fahrer über die Tretkurbel am Generator erzeugt und teilweise aus dem der Batterie entnommenen Strom. Mit einem solchen Fahrrad lässt sich die Fahrgeschwindigkeit innerhalb vorgegebener Grenzen weitgehend durch die an der Tretkurbel aufgebrachten Leistung steuern. Was einen für den Anwender im Vergleich zur vorigen Lösung vereinfachten Betrieb ergibt. Durch eine entsprechende Schaltung des Generators wird versucht, ein annähernd natürliches Verhalten eines solchen Fahrrades im Vergleich zu einem mechanisch angetriebenen Fahrzeug herzustellen, d.h., dass innerhalb einer Schaltstellung die Drehzahl der Antriebskurbel der Drehzahl des Antriebsrads entspricht. Es hat sich jedoch herausgestellt, dass diese Forderung nur im stationären oder annähernd stationären Betrieb einigermaßen zu erreichen ist. In Übergangszuständen, d.h. im transienten Betrieb, unterscheidet sich ein Fahrrad dieser Art erheblich von einem herkömmlichen Fahrrad, was sich unangenehm auf die Fahrbarkeit auswirkt.

Um diese bestehenden Nachteile insbesondere beim Anfahren auszugleichen, ist in der WO 00/59773 A die als nächstliegender Stand der Technik angesehen wird eine Lösung vorgeschlagen worden, bei der der Generator durch eine Steuerungseinrichtung so angesteuert wird, dass ein hohes Widerstandsmoment beim Anfahren die Tretkurbel bremst. Auf diese Weise kann das Verhalten eines Fahrzeugs, dem eines mechanischen angetriebenen Fahrzeugs angenähert werden. Um eine ausreichend genaue und realitätsnahe Anpassung erreichen zu können, wird bei dieser Lösung jedoch ein sehr hoher Aufwand benötigt, der insbesondere eine aufwendige Leistungselektronik zur Ansteuerung des Generators umfasst. Um die entsprechenden Widerstandsmomente aufbringen zu können, muss der Generator entsprechend groß und leistungsstark ausgebildet sein. Aufgrund des erforderlichen Aufwands haben sich solche Lösungen nicht durchgesetzt.

Eine weitere bekannte Lösung ist in der EP 0 784 008 A beschrieben. Auch hier wird von der Tretkurbel ein Generator angetrieben, um elektrischen Strom für den Vortrieb eines Fahrrades zu gewinnen. Zusätzliche Stromquellen wie ein von einer Brennkraftmaschine angetriebener Generator, Solarzellen oder wiederaufladbare Batterien können hier ebenfalls vorgesehen sein. Auch diese Lösung erfordert eine aufwändige Leistungselektronik, um einerseits das am Generator jeweils aufzubringende Drehmoment und andererseits den Antrieb entsprechend zu steuern.

Aufgabe der vorliegenden Erfindung ist es, ein Fahrzeug der oben beschriebenen Art so weiterzubilden, dass mit vertretbarem Aufwand eine möglichst realitätsnahe Abbildung des Verhaltens eines mechanisch angetriebenen Fahrzeugs erreicht werden kann.

Eine weitere Aufgabe der vorliegenden Erfindung ist es, ein weitgehend natürliches Verhalten eines solchen Fahrzeuges im Vergleich zu einem mechanisch angetriebenen Fahrzeug herzustellen, d.h., dass innerhalb einer Schaltstellung die Drehzahl der Tretkurbel mit der Fahrgeschwindigkeit in einer für den Benutzer des Fahrzeuges nachvollziehbaren Weise zusammenhängt. Es hat sich herausgestellt, dass insbesondere bei leistungsstarken Antrieben in Übergangszuständen, d.h. im transienten Betrieb, hohe Schwankungen des Antriebsmomentes zu beobachten sind, die das Fahrverhalten negativ beeinflussen. Solche Schwankungen sollen bei der erfindungsgemäßen Lösung weitgehend vermieden werden.

Erfindungsgemäß werden diese Aufgaben durch die Merkmale von Patentanspruch 1 gelöst. Wesentlich an der vorliegenden Erfindung ist, dass eine Bremseinrichtung vorgesehen ist, die zumindest einen Teil der an der Tretkurbel aufgebrachten Energie dissipiert. Im Gegensatz zu den Vorrichtungen des Standes der Technik dient somit die Tretkurbel nicht primär dazu, einen Teil der Antriebsenergie zu erzeugen, sondern in erster Linie dazu, die Fahrgeschwindigkeit des Fahrzeugs zu steuern. Wenn es erforderlich ist, können mit relativ einfachen Mitteln relativ hohe Widerstandsmomente an der Tretkurbel zur Verfügung gestellt werden, um beispielsweise das Anfahren am Berg realitätsnah simulieren zu können. Von besonderem Vorteil ist es dabei, wenn die Bremseinrichtung eine Schwungmasse in der Form eines Schwungrads umfasst. Durch das Vorsehen einer Schwungmasse wird die Steuerung wesentlich vereinfacht, da die Schwungmasse durch ihre Trägheit einer Änderung der Drehzahl der Tretkurbel selbsttätig Widerstand entgegensetzt. Die Masse der Schwungmasse kann in besonders vorteilhafter Weise dadurch verkleinert werden, dass die Schwungmasse mit der Tretkurbel über ein die Drehzahl erhöhendes Getriebe verbunden ist, das vorzugsweise ein Übersetzungsverhältnis von mindestens 1:3 aufweist. Auf diese Weise ist es möglich, das Fahrzeug besonders leicht auszubilden.

Eine besonders realitätsnahe Nachbildung eines herkömmlichen Fahrrads kann dadurch erreicht werden, dass die Steuerungseinrichtung so ausgebildet ist, dass das Verhältnis der Drehzahl der Tretkurbel zu der Drehzahl des Antriebsrades stufenweise konstant ist. Die einzelnen Gangstufen werden dabei durch eine Schaltung angesteuert, die in der gleichen Weise betätigt werden kann, wie die Gangschaltung eines mechanisch angetriebenen Fahrrads. Unterschiedlich dabei ist jedoch, dass die Schaltung nicht das Übersetzungsverhältnis des mechanischen Getriebes verändert, sondern lediglich das Verhalten der Steuerungseinrichtung beeinflusst. Alternativ dazu ist es auch möglich, dass die Steuerungseinrichtung so ausgebildet ist, dass das Verhältnis der Drehzahl der Tretkurbel zu der Drehzahl des Antriebsrades stufenweise variabel einem vorgegebenen Wert entspricht. Auf diese Weise kann ein Fahrzeug mit stufenlos variablem Getriebe simuliert werden.

Eine besonders begünstigte Ausführungsvariante der Erfindung sieht vor, dass die Steuerungseinrichtung dazu ausgebildet ist, die an der Tretkurbel aufgebrachte Leistung in einem konstanten Verhältnis zu der am Antriebsrad abgegebenen Leistung zu halten. Bei einer Steuerung dieser Art ist am Widerstand, der an der Tretkurbel anliegt, der jeweilige Fahrzustand des Fahrzeugs erkennbar. Dies bedeutet, dass bei der Bergauffahrt ein höherer Widerstand an der Tretkurbel feststellbar ist als etwa bei Rückenwind. Diese ermöglicht eine noch weitergehende Übereinstimmung des Fahrgefühls mit mechanisch angetriebenen Fahrzeugen als dies bei den oben beschriebenen Lösungen der Fall ist.

Eine besonders begünstigte Ausführungsvariante der Erfindung sieht vor, dass die Steuerungseinrichtung den Motor in Abhängigkeit von dem mit de Tretkurbel augenblicklich aufgebrachten Drehmoment, bzw. einer damit zusammenhängen Größe wie Leistung oder Drehzahl unter Anwendung einer zeitlichen Glättung steuert. Im Allgemeinen wird das Drehmoment, das an der Tretkurbel aufzubringen ist, um eine bestimmte Drehzahl der Tretkurbel zu erreichen, mit der Drehzahl ansteigt. Somit ist es auch möglich, die Drehzahl der Tretkurbel als ein das Moment charakterisierendes Signal heranzuziehen oder auch die an der Tretkurbel aufgebrachte Leistung. Auf diese Weise ist es möglich, in sehr feiner Weise die Leistung des Motors, der das Fahrzeug antreibt, durch die Betätigung der Tretkurbel zu steuern. Bei dieser Lösung werden insbesondere die im Fall hoher Motorleistungen auftretenden Schwierigkeiten vermieden, die aus dem über die Kurbeldrehung der Tretkurbel üblicherweise nicht gleichbleibenden Größen, wie Drehmoment und Drehzahl, resultieren. Im Verlauf von 360° Kurbelumdrehung verändert sich der Drehwinkel und durch die veränderten Hebelverhältnisse werden die Beine wechselseitige belastet und entlastet. Dies hat zur Folge, dass während der gesamten Umdrehung Drehmoment und Drehzahl wellenförmig schwanken, auch wenn sich der Fahrer darauf konzentriert, gleichmäßig zu treten. Durch die vorliegende Ausführungsvariante werden Schwankungen in der Antriebsleistung der Tretkurbel ausgeglichen, die bei herkömmlichen Fahrzeugen zu Schwankungen der Antriebsleistung des Motors führen würden, wenn sie mit einem ausreichend starken Motor ausgestattet wären. Bei solchen Fahrzeugen wäre es sehr schwierig, eine kontinuierliche gleichmäßige Fahrweise zu erzielen und eine bestimmte Geschwindigkeit gleichbleibend zu halten, da der Motor entsprechend der in der Tretkurbel auftretenden Schwankungen analoge Schwankungen im abgegebenen Drehmoment aufweisen würde. Dazu kommt bei starken Motoren ein Effekt, der darin besteht, dass die Schwankungen des Antriebsmomentes des Motors mit entsprechenden Beschleunigungen und Verzögerungen einhergehen, die den Fahrer in seinen Bemühungen gleichmäßig zu treten, noch weiter stören, wodurch es zu einer Aufschaukelung der Effekte kommen kann.

Die oben beschriebenen nachteiligen Wirkungen zeigen sich bei den derzeit am Markt befindlichen Fahrrädern im Allgemeinen nicht, da diese mit einem Motor ausgestattet sind, der ungefähr in der Leistungsklasse von Menschen liegt (250 WATT) und daher nicht genügend Leistungsreserven besitzt, um selbst bei geringen Geschwindigkeiten die oben beschriebenen Phänomen zu zeigen. Die Effekte treten erst auf, wenn entsprechend leistungsstarke Motoren verwendet werden, die ein Mehrfaches der vom Menschen aufgebrachten Leistung erbringen können, wie etwa im Fall von Fahrrädern eine Leistung von mehr als 1 kW, bzw. bei anderen Fahrzeugen eine entsprechende Größe. Wesentlich bei der beschriebenen Ausführungsvariante ist, dass die Haupteinflussgröße für die Steuerung des Motors nach wie vor das Drehmoment an der Bremseinrichtung ist, das von der das Fahrzeug antreibenden Person aufgebracht wird., bzw. eine mit diesem Drehmoment unmittelbare zusammenhängende Größe, wie etwa Drehzahl oder Leistung und dass dieser Wert allerdings einer gewissen zeitlichen Glättung unterzogen wird. Die Zeitkonstante der Glättung sollte etwa im Bereich der Zeitdauer einer typischen Kurbelumdrehung liegen, also größenordnungsmäßig etwa eine Sekunde betragen. Mit der erfindungsgemäßen Lösung werden gleichmäßige Geschwindigkeiten in allen Geschwindigkeitsbereichen ermöglicht, ohne die gewollte Erhöhung der Geschwindigkeit (Gas geben) zu vernachlässigen.

Für die Realisierung der Glättung stehen verschiedene Verfahren zur Auswahl. Zum einen kann das Signal, das das augenblickliche Drehmoment an der Tretkurbel abbildet, durch einen analogen Tiefpassfilter geglättet werden. Dadurch werden hohe Frequenzen, die beispielsweise von der Unregelmäßigkeit des Drehmoments an der Tretkurbel beseitigt, die durch die unterschiedlichen Hebelverhältnisse in Abhängigkeit von der Winkellage verursacht werden.

Eine alternative Methode ist das Verfahren des gleitenden Durchschnitts, das insbesondere dann mit großem Vorteil eingesetzt werden kann, wenn die Signalverarbeitung digital erfolgt.

Die Berechnung erfolgt dabei auf folgende Weise:

Allgemein hängt die Leistung P des Elektromotors von der Leistung PT an der Tretkurbel ab:

$$PM = f(PT) \tag{1}$$

wobei f eine vorgegebene Funktion bedeutet.

In zeitlicher Betrachtungsweise gilt für die Leistung P zum Zeitpunkt t:

$$PM(t) = f(PT(t), PT(t-1), \ldots PT(t-i) \ldots) \tag{2}$$

wobei der Einfluss von PT mit zunehmendem zeitlichen Abstand, d.h. größerem i immer mehr abnimmt. Das Verfahren des gleitenden Durchschnitts verwendet einen geglätteten Wert GT für das die Leistung PT, der nach folgender Formel berechnet wird:

$$GT(t) = \alpha.PT(t) + (1-\alpha).GT(t-1) \tag{3}$$

Dabei steuert der Parameter $\alpha$ den Einfluss der Vergangenheit, d.h. dass ein Wert knapp unterhalb von 1 eine sehr geringe kurzzeitige Glättung bedeutet und dass ein kleinerer Wert eine stärkere Einbeziehung der Vergangenheit und damit eine stärkere Glättung bewirkt. Werden die einzelnen Werte alle 10 Millisekunden genommen, so ist ein Wert von $\alpha = 0{,}04$ eine vorteilhafte Wahl. Je größer die zeitliche Auflösung ist, umso kleiner wird $\alpha$ gewählt.

Im analogen Bereich wird der oben beschriebene Effekt in ähnlicher Weise durch ein Integrationsglied bewirkt.

Eine alternative Methode zur Glättung der Steuersignale ist das Verwenden eines Kondensators in Parallelschaltung zum Motor, oder alternativ zum Generator, wenn ein solcher vorgesehen ist. Der Kondensator wirkt dann ähnlich wie eine Schwungscheibe als Ausgleichsglied für die schwankenden Ströme des Motors bzw. des Generators und gleicht bei richtiger Dimensionierung die Schwankungen entsprechend aus.

Eine weitere Methode zur Glättung der Steuersignale erhält man, wenn man über einen Steuerhebel, oder auch ein Gasgriff wie bei Motorrädern üblich, eine maximal zu erreichende Geschwindigkeit festlegt, die nicht überschritten werden kann, unabhängig davon welche Leistung von den Pedalen erbracht wird. Dabei wird bei Geschwindigkeiten unterhalb der Maximalgeschwindigkeit die Leistung am Motor proportional zu erbrachten Leistung an den Pedalen erbracht, sobald man in oder über den gerade eingestellten Maximalgeschwindigkeitsbereich kommt, bleibt der Leistung am Motor konstant, solange man diesen Bereich mit den Pedalen nicht unterschreitet. Der einzustellende Maximalgeschwindigkeitsbereich kann dabei in jedem Geschwindigkeitsbereich entweder kontinuierlich oder stufenweise variabel eingestellt werden.

In einer weiteren Ausführungsvariante der Erfindung kann vorgesehen sein, dass die Bremseinrichtung einen Generator umfasst. Der im Generator erzeugte Strom kann beispielsweise für die Beleuchtung oder aber zur Einspeisung in den Stromspeicher verwendet werden. In jedem Fall ist jedoch der Generator nur zusätzlich zu eigentlichen mechanischen oder hydrodynamischen Bremse vorgesehen.

Eine besonders präzise Ansteuerung der Bremse kann dadurch erreicht werden, dass die Bremseinrichtung eine hydrodynamische Bremse umfasst.

Ein Zusatznutzen, der den Betrieb dieses erfindungsgemäßen Fahrzeugs weiter vereinfacht kann dadurch erzielt werden, dass die Steuerungseinrichtung auch zum Bremsen des Fahrzeuges dient.

Weiters ist es von besonderem Vorteil, wenn die Bremseinrichtung als Kombination aus einer mechanischen Bremse und einer hydrodynamischen oder elektrischen Bremse ausgebildet ist und dass die mechanische Bremse primär beim Anfahren oder bei starkem Beschleunigen eingesetzt wird und dass die hydrodynamische oder elektrische Bremse primär im kontinuierlichen Betrieb und bei leichten Beschleunigungen oder Verzögerungen eingesetzt wird. Diese Zweiteilung entspricht zum einen der unterschiedlichen Steuerbarkeit der Bremssysteme, da sich mechanische Bremsen punktgenau mit sehr hohem Moment steuern lassen, jedoch bei längerer Beanspruchung heiß laufen, während hydrodynamische oder elektrische Bremsen weniger genau gesteuert werden können, aber für Dauerbelastungen gut geeignet sind.

In der Folge wird die vorliegende Erfindung anhand der in den Figuren dargestellten Ausführungsbeispiele näher erläutert. Es zeigen:

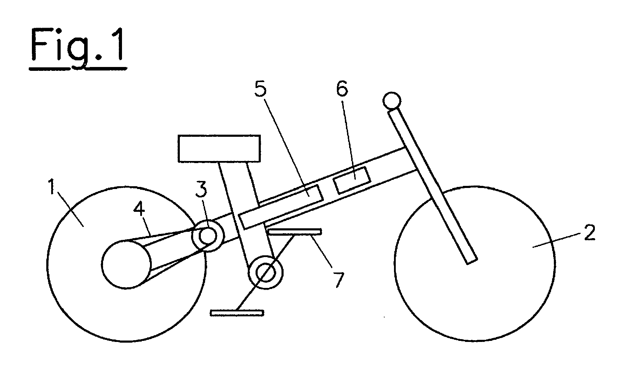

Fig. 1    den grundsätzlichen Aufbau eines erfindungsgemäßen Fahrzeugs in einer seitlichen Darstellung;

Fig. 2    ein Detail von Fig. 1 im Schnitt;

Fig. 3    eine Ausführungsvariante der Erfindung in einem Schaltungsdiagramm; und

Fig. 4    und Fig. 5 weitere Ausführungsvarianten der Erfindung.

Das Fahrzeug ist als Fahrrad ausgebildet, das in herkömmlicher Weise ein Hinterrad 1, das das Antriebsrad darstellt, sowie ein Vorderrad 2 aufweist. Ein Elektromotor 3 treibt über eine Kette 4 das Hinterrad 1 an. Dabei wird der Elektromotor 3 über einen Stromspeicher 5 in der Form von wiederaufladbaren Batterien mit Energie versorgt. Ein Steuergerät 6 steuert den Elektromotor 3 beispielsweise über einen Frequenzumrichter, so dass eine jeweils vorgegebene Fahrgeschwindigkeit erreicht wird.

Wie bei einem herkömmlichen Fahrrad ist eine Tretkurbel 7 vorgesehen, die jedoch mechanisch nicht mit dem Antriebsrad 1 verbunden ist.

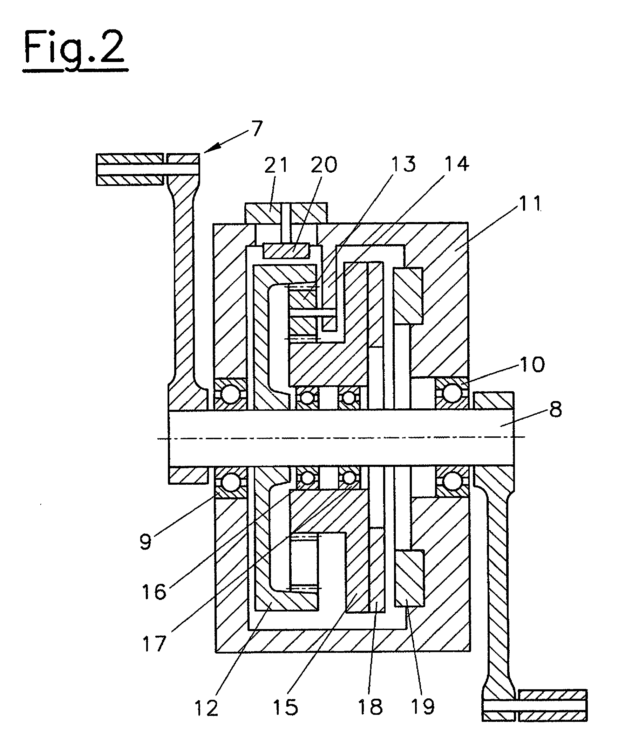

In Fig. 2 ist der mechanische Aufbau im Bereich der Tretkurbel 7 mit einem Generator und einer zusätzlichen mechanischen Bremse als Bremseinrichtung näher dargestellt. Die Tretkurbel 7 ist auf einer Welle 8 befestigt, die über Lager 9, 10 an einer gehäusefesten Halterung 11 angebracht sind. Verdrehfest mit der Welle 8 ist ein Hohlrad 12 verbunden, in das ein Zwischenzahnrad 13 eingreift, das auf einem Vorsprung 14 der Halterung 11 gehalten ist. Das Zwischenzahnrad 13 treibt ein Schwungrad 15 mit einem Übersetzungsverhältnis von etwa 3:1 an, das über weitere Lager 16, 17 drehbar auf der Welle 8 gelagert ist. Am Schwungrad 15 ist ein Scheibenläufer 16, 18 angebracht, der mit einer feststehenden Wicklung 19 zusammenwirkt und einerseits als Drehzahlsensor dient, und andererseits Strom erzeugt, der Verbrauchern zugeführt werden kann.

Schematisch dargestellt ist eine Bremsbacke 20, die auf die äußere Umfangsfläche des Hohlrades 12 einwirkt und durch einen Elektromagnet 21 mit variabler Anstellkraft in Eingriff gebracht werden kann.

Die Steuerungseinrichtung 6 arbeitet bei dieser Ausführungsvariante in der folgenden Weise: Über den Scheibenläufer 18 wird die jeweilige Drehzahl der Tretkurbel 7 erfasst. Der Elektromotor 3 wird in der Folge so angesteuert, dass die Drehzahl des Antriebsrades 1 stets in einem festen Verhältnis zu der Drehzahl der Tretkurbel 7 ist. Dieses Drehzahlverhältnis kann entweder stufenlos oder in vorbestimmten Stufen durch einen nicht dargestellten Hebel am Lenker verstellt werden. Rein kinematisch verhält sich das Fahrrad somit exakt gleichartig, wie ein herkömmliches Fahrrad mit Gangschaltung. Die Fahrgeschwindigkeit ist direkt proportional zu der Drehzahl der Tretkurbel 7, wobei der Proportionalitätsfaktor vom jeweils gewählten Gang abhängt. Um nun eine geeignete und realitätsnahe Rückmeldung an den Fahrer zu verwirklichen, wird die Bremse durch die Steuereinrichtung 6 so gesteuert, dass das auf der Tretkurbel aufzubringende Moment proportional dem am Antriebsrad 1 aufgebrachten Moment ist. Dies bedeutet, dass auch die Leistung, die der Fahrer an der Tretkurbel 7 an das Fahrrad abgibt, proportional zu der erforderlichen Vortriebsleistung ist. Sofern der Proportionalitätsfaktor 1 ist, würde sich das Fahrrad im Prinzip völlig wie ein konventionelles Fahrrad verhalten. In der Praxis wird der Proportionalitätsfaktor jedoch wesentlich kleiner als 1 aber über 0 sein und beispielsweise 0,1 betragen. Dies bedeutet, dass die an der Tretkurbel 7 aufgebrachte Leistung einen Bruchteil, zum Beispiel ein Zehntel der tatsächlich erforderlichen Leistung beträgt. Der Proportionalitätsfaktor kann auch in den einzelnen Gängen unterschiedlich sein, so dass bei Auswahl eines größeren Übersetzungsverhältnisses, d.h. eines schnelleren Ganges, ein größerer Verstärkungsfaktor für die Leistung vorliegt.

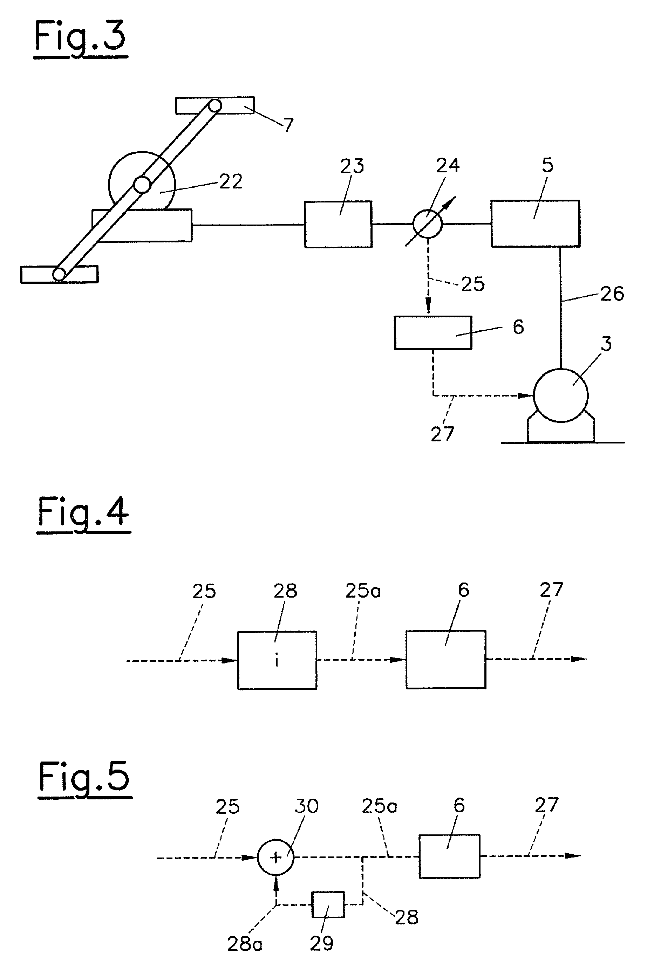

Fig. 3 zeigt eine Möglichkeit der Ausbildung einer erfindungsgemäßen Schaltung. Durch die Tretkurbel 7 wird ein Generator 22 angetrieben, der hier die Bremseinrichtung darstellt. Der vom Generator 22 erzeugte Strom wird in einer Kondensatoreinrichtung 23 zeitlich geglättet und dem Stromspeicher 5 zugeführt. Vor dem Stromspeicher 5 wird der Strom in einer Messeinrichtung 24 erfasst, so dass ein entsprechendes Steuersignal über eine Steuerleitung 25 der Steuereinrichtung 6 zugeführt werden kann. Die Steuerungseinrichtung 6 steuert über eine weitere Steuerungsleitung 27 den Elektromotor 3, der das Fahrzeug antreibt, wobei die eigentliche Stromversorgung aus dem Stromspeicher 5 über eine Versorgungsleitung 26 erfolgt.

In Fig. 4 ist eine alternative Ausführungsvariante der Erfindung im Detail dargestellt. Hier wird über die Steuerleitung 25 ein noch nicht geglättetes Signal (eine Kondensatoranordnung 23 oder dergleichen ist hier nicht vorgesehen) einem Integrationsglied 28 zugeführt. Über die Fortsetzung der Steuerleitung 25a wird die Steuerungseinrichtung 6 mit einem Signal versorgt, um die tatsächlichen Steuerungssignale über die weitere Steuerleitung 27 abgeben zu können. Anstelle des Integrationsglieds 28 kann auch ein nicht dargestellter Tiefpassfilter eingesetzt werden.

Fig. 5 zeigt eine Ausführungsvariante, bei der in der Steuerleitung 25 ein Addierglied 30 vorgesehen ist. Aus der Fortsetzung 25a stromabwärts des Addierglieds 30 wird über eine Rückführleitung 28 das Signal abgenommen und einem Dämpfungs- und Verzögerungsglied 29 zugeführt. Das daraus resultierende Signal wird über die stromabwärtige Leitung 28a dem Addierglied 30 als zweites Eingangssignal zugeführt. Auch durch diese Schaltung kann eine zeitliche Glättung bewirkt werden.

Durch die erfindungsgemäße Lösung wird erreicht, dass die Fahrbarkeit des Fahrzeugs auch bei hohen Leistungen des Motors in beträchtlicher Weise gesteigert wird, so dass auch für unerfahrene Personen ein leichter und ungefährlicher Betrieb des Fahrzeugs und das Einhalten gleichmäßiger Geschwindigkeiten möglich ist.

Wie bei einem herkömmlichen Fahrrad ist eine Tretkurbel 7 vorgesehen, die jedoch mechanisch nicht mit dem Antriebsrad 1 verbunden ist.

In Fig. 2 ist der mechanische Aufbau im Bereich der Tretkurbel 7 näher dargestellt. Die Tretkurbel 7 ist auf einer Welle 8 befestigt, die über Lager 9, 10 an einer gehäusefesten Halterung 11 angebracht sind. Verdrehfest mit der Welle 8 ist ein Hohlrad 12 verbunden, in das ein Zwischenzahnrad 13 eingreift, das auf einem Vorsprung 14 der Halterung 11 gehalten ist. Das Zwischenzahnrad 13 treibt ein Schwungrad 15 mit einem Übersetzungsverhältnis von etwa 3:1 an, das über weitere Lager 16, 17 drehbar auf der Welle 8 gelagert ist. Am Schwungrad 15 ist ein Scheibenläufer 16, 18 angebracht, der mit einer feststehenden Wicklung 19 zusammenwirkt und einerseits als Drehzahlsensor dient, und andererseits Strom erzeugt, der Verbrauchern zugeführt werden kann.

Schematisch dargestellt ist eine Bremsbacke 20, die auf die äußere Umfangsfläche des Hohlrades 12 einwirkt und durch einen Elektromagnet 21 mit variabler Anstellkraft in Eingriff gebracht werden kann.

Die Steuerungseinrichtung 6 arbeitet bei dieser Ausführungsvariante in der folgenden Weise: Über den Scheibenläufer 18 wird die jeweilige Drehzahl der Tretkurbel 7 erfasst. Der Elektromotor 3 wird in der Folge so angesteuert, dass die Drehzahl des Antriebsrades 1 stets in einem festen Verhältnis zu der Drehzahl der Tretkurbel 7 ist. Dieses Drehzahlverhältnis kann entweder stufenlos oder in vorbestimmten Stufen durch einen nicht dargestellten Hebel am Lenker verstellt werden. Rein kinematisch verhält sich das Fahrrad somit exakt gleichartig, wie ein herkömmliches Fahrrad mit Gangschaltung. Die Fahrgeschwindigkeit ist direkt proportional zu der Drehzahl der Tretkurbel 7, wobei der Proportionalitätsfaktor vom jeweils gewählten Gang abhängt. Um nun eine geeignete und realitätsnahe Rückmeldung an den Fahrer zu verwirklichen, wird die Bremse durch die Steuereinrichtung 6 so gesteuert, dass das auf der Tretkurbel aufzubringende Moment proportional dem am Antriebsrad 1 aufgebrachten Moment ist. Dies bedeutet, dass auch die Leistung, die der Fahrer an der Tretkurbel 7 an das Fahrrad abgibt, proportional zu der erforderlichen Vortriebsleistung ist. Sofern der Proportionalitätsfaktor 1 ist, würde sich das Fahrrad im Prinzip völlig wie ein konventionelles Fahrrad verhalten. In der Praxis wird der Proportionalitätsfaktor jedoch wesentlich kleiner als 1 aber über 0 sein und beispielsweise 0,1 betragen. Dies bedeutet, dass die an der Tretkurbel 7 aufgebrachte Leistung einen Bruchteil, zum Beispiel ein Zehntel der tatsächlich erforderlichen Leistung beträgt. Der Proportionalitätsfaktor kann auch in den einzelnen Gängen unterschiedlich sein, so dass bei Auswahl eines größeren Übersetzungsverhältnisses, d.h., eines schnelleren Ganges, ein größerer Verstärkungsfaktor für die Leistung vorliegt.

Mit der vorliegenden Erfindung ist es möglich, ein Fahrrad zu realisieren, das sich im Betrieb weitgehend wie ein herkömmliches Fahrrad verhält, mit dem Unterschied, dass die tatsächlich zum Vortrieb eingesetzte Leistung gegenüber der an der Tretkurbel 7 aufgebrachten Leistung verstärkt wird. Es kann damit bei geringem körperlichen Aufwand eine hohe Fahrgeschwindigkeit erreicht werden, ohne dass grundsätzliche Verhalten des Fahrrads zu verändern. Prinzipiell ist anzumerken, dass die oben beschriebenen Eigenschaften, wie die Proportionalität der Drehzahlen von Tretkurbel 7 und Antriebsrad 1 nur solange erhalten bleiben, als die Leistung des Elektromotors 3 ausreicht, die von der Steuerungseinrichtung 6 vorgegebenen Fahrgeschwindigkeit zu realisieren. Sobald der Elektromotor 3 an seine Leistungsgrenze 3 gelangt, kann durch einen zusätzlichen Widerstand an der Tretkurbel 7 eine entsprechende Rückmeldung an den Fahrer abgegeben werden. Dadurch kann eine besondere Realitätsnähe erzeugt werden.

**Patentansprüche**

1. Fahrzeug, insbesondere Fahrrad, mit mindestens einem Antriebsrad (1), einem Motor (3), der mit dem Antriebsrad (1) verbunden ist, einem Stromspeicher (5) zur Versorgung des Motors (3), einer Steuerungseinrichtung (6) zur Steuerung des Motors (3) und mit einer Tretkurbel (7), die unabhängig vom Antriebsrad (1) bewegbar ist, **dadurch gekennzeichnet, dass** die Tretkurbel (7) mit einer Bremseinrichtung (20, 21) verbunden ist, die ein Schwungrad (15) umfasst und die der Drehung der Tretkurbel (7) ein Widerstandsmoment entgegensetzt und dass das Widerstandsmoment der Bremseinrichtung (20, 21) von der Steuerungseinrichtung (6) gesteuert ist

2. Fahrzeug nach Anspruch 1, **dadurch gekennzeichnet, dass** das Schwungrad (15) mit der Tretkurbel (7) über ein die Drehzahl erhöhendes Getriebe verbunden ist, das vorzugsweise ein Übersetzungsverhältnis von mindestens 1:3 aufweist.

3. Fahrzeug nach einem der Ansprüche 1 bis 2, **dadurch gekennzeichnet, dass** die Steuerungseinrichtung (6) so ausgebildet ist, dass das Verhältnis der Drehzahl der Tretkurbel (7) zu der Drehzahl des Antriebsrades (1) stufenweise konstant ist.

**4.** Fahrzeug nach einem der Ansprüche 1 bis 2, **dadurch gekennzeichnet, dass** die Steuerungseinrichtung (6) so ausgebildet ist, dass das Verhältnis der Drehzahl der Tretkurbel (7) zu der Drehzahl des Antriebsrades (1) stufenweise variabel einem vorgegebenen Wert entspricht.

**5.** Fahrzeug nach einem der Ansprüche 1 bis 2, **dadurch gekennzeichnet, dass** die Steuerungseinrichtung (6) dazu ausgebildet ist, die an der Tretkurbel (7) aufgebrachte Leistung in einem konstanten Verhältnis zu der am Antriebsrad (1) abgegebenen Leistung zu halten.

**6.** Fahrzeug nach einem der Ansprüche 1 bis 5, **dadurch gekennzeichnet, dass dadurch gekennzeichnet, dass** die Steuerungseinrichtung (6) den Motor (3) in Abhängigkeit von dem mit der Tretkurbel (7) augenblicklich aufgebrachten Drehmoment bzw. einer damit zusammenhängenden Größe wie Leistung oder Drehzahl unter Anwendung einer zeitlichen Glättung steuert und dass die Glättung nur ungewollte kurze, über eine Drehung durch die wechselseitige Belastung der menschlichen Beine verursachte Schwankungen ausgleicht, gewolltes Beschleunigen oder Geschwindigkeitsverringerungen jedoch erkennt und unverzögert umsetzt.

**7.** Fahrzeug nach einem der Ansprüche 6 oder 7, **dadurch gekennzeichnet, dass** die zeitliche Glättung durch einen analogen Tiefpassfilter in der Steuerungseinrichtung (6) verwirklicht ist.

**8.** Fahrzeug nach einem der Ansprüche 6 oder 7, **dadurch gekennzeichnet, dass** die zeitliche Glättung durch digitale Bildung eines gleitenden Durchschnitts in Bezug auf das mit der Tretkurbel (7) augenblicklich aufgebrachte Drehmoment und/oder durch ein Integrationsglied (28) in der Steuerungseinrichtung (6) verwirklicht ist.

**9.** Fahrzeug nach einem der Ansprüche 6 bis 8, **dadurch gekennzeichnet, dass** der Motor als Elektromotor (3) ausgebildet ist und dass die zeitliche Glättung durch einen Kondensator verwirklicht ist, der parallel zum Elektromotor (3) und oder zum Generator geschaltet ist.

**10.** Fahrzeug nach einem der Ansprüche 1 bis 9, **dadurch gekennzeichnet, dass** das Widerstandsmoment der Bremseinrichtung (20, 21, 22) von der Steuerungseinrichtung (6) gesteuert ist.

**11.** Fahrzeug nach einem der Ansprüche 1 bis 8, **dadurch gekennzeichnet, dass** der Motor als Brennkraftmaschine mit innerer Verbrennung ausgebildet ist.

**12.** Fahrzeug nach einem der Ansprüche 1 bis 11, **dadurch gekennzeichnet, dass** die Bremseinrichtung (20, 21) einen Generator umfasst, der vorzugsweise von der Steuerungseinrichtung (6) angesteuert ist.

**13.** Fahrzeug nach einem der Ansprüche 1 bis 12, **dadurch gekennzeichnet, dass** die Bremseinrichtung (20, 21) eine hydrodynamische Bremse und/oder eine mechanisch wirkende Bremse umfasst.

**14.** Fahrzeug nach einem der Ansprüche 1 bis 13, **dadurch gekennzeichnet, dass** die Steuerungseinrichtung (6) auch zum Bremsen des Fahrzeuges dient.

**15.** Fahrzeug nach einem der Ansprüche 1 bis 14, **dadurch gekennzeichnet, dass** die Bremseinrichtung als Kombination aus einer mechanischen Bremse und einer hydrodynamischen oder elektrischen Bremse ausgebildet ist und dass die mechanische Bremse primär beim Anfahren oder bei starkem Beschleunigen eingesetzt wird und dass die hydrodynamische oder elektrische Bremse primär im kontinuierlichen Betrieb und bei leichten Beschleunigungen oder Verzögerungen eingesetzt wird.

**Claims**

**1.** Vehicle, especially a bicycle, with at least one drive wheel (1), a motor (3) connected to the drive wheel (1), an electrical storage battery (5) for powering the motor (3), a control unit (6) for controlling the motor (3), and with a pedal crank (7), which can be rotated independently of the drive wheel (1), **characterised in that** the pedal crank (7) is connected to a braking device (20, 21), which comprises a flywheel (15) and exerts a resisting moment on the pedal crank (7), and that the resisting moment of the braking device (20, 21) is controlled by the control unit (6).

**2.** Vehicle according to claim 1, **characterised in that** the flywheel (15) is connected to the pedal crank (7) via a speed-increasing gear whose transmission ratio preferably is at least 1:3.

3. Vehicle according to any of claims 1 to 2, **characterised in that** the control unit (6) is designed such that the ratio of revolutions per minute of the pedal crank (7) to revolutions per minute of the drive wheel (1) is stepwise constant.

4. Vehicle according to any of claims 1 to 2, **characterised in that** the control unit (6) is designed such that the ratio of revolutions per minute of the pedal crank (7) to revolutions per minute of the drive wheel (1) corresponds to a predetermined value in a stepwise variable manner.

5. Vehicle according to any of claims 1 to 2, **characterised in that** the control unit (6) is designed such that the ratio between the power input at the pedal crank (7) and the power output at the drive wheel (1) is kept constant.

6. Vehicle according to any of claims 1 to 5, **characterised in that** the control unit (6) controls the motor (3) depending on the torque instantaneously applied at the pedal crank (7) or on a related quantity such as power or speed, using a temporal smoothing process which is such that it smoothes involuntary short-time fluctuations caused by the alternating load of the human legs during one rotation while it recognizes voluntary acceleration or deceleration, transmitting it without delay.

7. Vehicle according to any of claims 6 or 7, **characterised in that** the temporal smoothing process is realized by an analog low-pass filter in the control unit (6).

8. Vehicle according to any of claims 6 or 7, **characterised in that** the temporal smoothing process is realized by digital computation of a moving average of the instantaneously applied torque at the pedal crank (7) and/or by an integrating element (28) in the control unit (6).

9. Vehicle according to any of claims 6 to 8, **characterised in that** the motor is an electric motor (3), and that the temporal smoothing process is realized by a capacitor in parallel with the electric motor (3) and/or the generator.

10. Vehicle according to any of claims 1 to 9, **characterised in that** the resisting moment of the braking device (20, 21, 22) is conrolled by the control unit (6).

11. Vehicle according to any of claims 1 to 8, **characterised in that** the motor is an internal combustion engine.

12. Vehicle according to any of claims 1 to 11, **characterised in that** the braking device (20, 21) comprises a generator, which preferably is controlled by the control unit (6).

13. Vehicle according to any of claims 1 to 12, **characterised in that** the braking device (20, 21) comprises a hydro-dynamical brake and/or a mechanical brake.

14. Vehicle according to any of claims 1 to 13, **characterised in that** the control unit (6) also is used for braking the vehicle.

15. Vehicle according to any of claims 1 to 14, **characterised in that** the braking device is designed as a combination of a mechanical and a hydrodynamical or electrical brake, and that the mechanical brake is primarily used during the starting phase or in the case of strong acceleration, and that the hydrodynamical or electrical brake is primarily used during continuous operation and in the case of small acceleration or deceleration.

**Revendications**

1. Véhicule notamment cycle comportant au moins une roue motrice (1), un moteur (3) relié à la roue motrice (1), un accumulateur d'énergie électrique (5) pour alimenter le moteur (3), une installation de commande (6) pour commander le moteur (3) et un pédalier (7) mobile indépendamment de la roue motrice (1),
   **caractérisé en ce que**
   le pédalier (7) est relié à une installation de frein (20, 21) comprenant un volant d'inertie (15) et qui oppose un couple résistant à la rotation du pédalier (7), et
   le couple résistant de l'installation de frein (20, 21) est commandé par l'installation de commande (6).

2. Véhicule selon la revendication 1,
   **caractérisé en ce que**
   le volant d'inertie (15) est relié au pédalier (7) par une transmission démultiplicatrice de la vitesse de rotation, ayant de préférence un rapport de démultiplication d'au moins 1 :3.

3. Véhicule selon les revendications 1 et 2,
   **caractérisé en ce que**
   l'installation de commande (6) est réalisée pour que le rapport de la vitesse de rotation du pédalier (7) et la vitesse de rotation de la roue motrice (1) soit constant par palier.

4. Véhicule selon les revendications 1 et 2,
   **caractérisé en ce que**
   l'installation de commande (6) est réalisée pour que le rapport de la vitesse de rotation du pédalier (7) et de la vitesse de rotation de la roue motrice (1) soit variable par des paliers correspondant à une valeur pré-définie.

5. Véhicule selon les revendications 1 et 2,
   **caractérisé en ce que**
   l'installation de commande (6) est réalisée pour que la puissance appliquée au pédalier (7) soit dans un rapport constant à la puissance fournie par la roue motrice (1).

6. Véhicule selon les revendications 1 à 5,
   **caractérisé en ce que**
   l'installation de commande (6) commande le moteur (3) en fonction du couple instantané fourni par le pédalier (7) ou d'une grandeur liée à celui-ci telle que la puissance ou la vitesse de rotation en appliquant un lissage dans le temps, et
   le lissage compense seulement de brèves sollicitations alternées appliquées à la rotation par les jambes humaines, en reconnaissant néanmoins un souhait d'accélération ou de diminution de vitesse et en convertissant ce souhait de manière non temporisée.

7. Véhicule selon la revendication 6,
   **caractérisé en ce que**
   le lissage dans le temps est réalisé par un filtre passe-bas analogique de l'installation de commande (6).

8. Véhicule selon la revendication 6 ou 7,
   **caractérisé en ce que**
   le lissage dans le temps est réalisé en formant de manière numérique une moyenne glissante du couple appliqué instantanément par le pédalier (7) et/ou par un élément d'intégration (28) de l'installation de commande (6).

9. Véhicule selon les revendications 6 à 8,
   **caractérisé en ce que**
   le moteur est un moteur électrique (3), et
   le lissage en fonction du temps est réalisé par un condensateur branché en parallèle sur le moteur électrique (3) et/ ou le générateur.

10. Véhicule selon les revendications 1 à 9,
    **caractérisé en ce que**
    le couple résistant appliqué par l'installation de frein (20, 21, 22) est commandé par l'installation de commande (6).

11. Véhicule selon les revendications 1 à 8,
    **caractérisé en ce que**
    le moteur est un moteur à combustion interne.

12. Véhicule selon les revendications 1 à 11,
    **caractérisé en ce que**
    l'installation de frein (20, 21) comprend un générateur commandé de préférence par l'installation de commande (6).

13. Véhicule selon les revendications 1 à 12,
    **caractérisé en ce que**
    l'installation de frein (20, 21) est un frein hydrodynamique et/ou un frein mécanique.

14. Véhicule selon les revendications 1 à 13,

**caractérisé en ce que**

l'installation de commande (6) sert également à freiner le véhicule.

15. Véhicule selon les revendications 1 à 14,

**caractérisé en ce que**

l'installation de frein est réalisée sous la forme de la combinaison d'un frein mécanique et d'un frein hydrodynamique ou électrique,

le frein mécanique étant utilisé principalement au démarrage ou pour de fortes accélérations, et

le frein hydrodynamique ou électrique étant utilisé principalement en mode continu et pour de faibles accélérations ou décélérations.

Fig.1

# Fig.2

## Fig.3

## Fig.4

## Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3884317 A
- WO 0059773 A

- EP 0784008 A